# EUROPÄISCHE PATENTSCHRIFT

(11) **EP 3 814 119 B1**
(45) Veröffentlichungstag und Bekanntmachung des Hinweises auf die Patenterteilung: **15.12.2021**
(21) Anmeldenummer: 19728018.3
(22) Anmeldetag: 29.05.2019
(51) Int. Cl.: B29C 65/48, B29C 65/00, B29C 65/78, B29C 65/14, B62D 27/02, B29C 65/52, B29L 31/30

(54) **VERBINDUNGSELEMENT ZUM AUFKLEBEN AUF EINER BAUTEILOBERFLÄCHE SOWIE HERSTELLUNGSVERFAHREN UND BEFESTIGUNGSVERFAHREN HIERFÜR**
CONNECTION ELEMENT FOR ADHERING TO A COMPONENT SURFACE AND PRODUCTION METHOD AND SECURING METHOD THEREFOR
ÉLÉMENT DE LIAISON À COLLER SUR UNE SURFACE DE PIÈCE AINSI QUE PROCÉDÉ DE PRODUCTION ET PROCÉDÉ DE FIXATION ASSOCIÉS

(30) Priorität: 05.07.2018 DE 102018116350
(43) Veröffentlichungstag der Anmeldung: 05.05.2021
(73) Patentinhaber: Böllhoff Verbindungstechnik GmbH, 33649 Bielefeld (DE)
(72) Erfinder: DRÜKE, Franz, 32758 Detmold (DE)
(74) Vertreter: HWP Intellectual Property
(86) Internationale Anmeldenummer: PCT/EP2019/063996
(87) Internationale Veröffentlichungsnummer: WO 2020/007540

(56) Entgegenhaltungen:
- US-A1- 2002 134 489
- US-A1- 2012 261 066
- US-A1- 2013 119 191
- US-A1- 2014 036 353

## Beschreibung

### 1. Gebiet der Erfindung

Die vorliegende Erfindung betrifft ein Verbindungselement zum Aufkleben auf einer Bauteiloberfläche, ein erstes Bauteil mit einem darauf aufgeklebten Verbindungselement, eine Anordnung bestehend aus einem ersten und einem zweiten Bauteil, die über ein Verbindungselement verbunden sind, ein Herstellungsverfahren für das Verbindungselement sowie ein Befestigungsverfahren.

### 2. Hintergrund der Erfindung

Für verschiedenste Anwendungen im Bootsbau, im Transportwesen sowie der Luft- und Raumfahrt werden im Stand der Technik Verbindungselemente zum Befestigen eines Anbauteils an einem Strukturbauteil beschrieben, welche mittels selbstklebenden Klebebbrücken verarbeitet werden. Dabei werden Verbindungselemente verwendet, die eine Montagestruktur wie beispielsweise ein Innen- oder Außengewinde umfassen. Es sind auch, bezogen auf die Klebefläche, abgewinkelte Montagestrukturen bekannt, die beispielsweise eine Mutter oder einen Abstandhalter umfassen.

Die Befestigung erfolgt üblicherweise mit einem herkömmlichen Zwei-Komponenten-Klebstoff, der auf eine Klebfläche des Verbindungselements aufgetragen wird. Dazu befindet sich das Verbindungselement samt Klebstoff in einer Klebebrücke, die mittels doppelseitigen Klebebands auf der Bauteiloberfläche des Strukturbauteils aufgeklebt wird. Mit dieser Klebebrücke wird das Verbindungselement auf der Bauteiloberfläche des Strukturbauteils gehalten, bis der Zwei-Komponenten-Klebstoff ausgehärtet ist.

Bei der Verwendung erfolgt daher, wie in Figur 1 gezeigt, zunächst ein Auftragen des Klebstoffs auf die Klebfläche 3 des Verbindungselements 1 sowie ein Abziehen der Schutzschicht von den Klebebänder 5 an den Füßen 7 der Klebebrücke 9. Danach findet ein Aufsetzen der Klebebrücke 9 mit den Klebebändern 5 auf die Bauteiloberfläche des Strukturbauteils A statt, welches mit dem Verbindungselement 1 beklebt werden soll. Daran schließt sich ein Herunterdrücken des Verbindungselements 1 in der Klebebrücke 9 an, sodass die Klebfläche 3 samt Klebstoff auf die Bauteiloberfläche des Strukturbauteils A gedrückt wird. Diese Schritte sind in Figur 2 dargestellt. Abschließend erfolgt, wie in Figur 3 gezeigt, ein Entfernen der Klebebrücke 9 nachdem der Klebstoff seine vollständige Festigkeit erreicht hat.

Ein Nachteil dieser Vorgehensweise ist, dass bei der Befestigung des Verbindungselements als gesondertes Bauteil die Klebebrücke erforderlich ist, die in einem gesonderten Schritt entfernt werden muss. Vorteilhaft ist demgegenüber, dass mit dieser Vorgehensweise jede gewünschte Materialkombination für das Verbindungselement verarbeitbar ist.

Um die Verwendung der Klebebrücke zu vermeiden und eine effizientere Vorfixierung des Verbindungselements auf der Bauteiloberfläche eines Strukturbauteils zu erreichen, ist die Verwendung eines Verbindungselements aus einem transparenten oder mit Licht durchstrahlbaren Material in Verbindung mit einem mittels Licht härtenden Klebstoff bekannt.

Ein entsprechendes Verbindungselement und ein Verfahren zu seiner Befestigung auf einer Oberfläche ist beispielsweise beschrieben in DE 10 2006 012 411 A1. Das Verbindungselement umfasst ein hülsenförmiges Aufnahmeteil zum Aufnehmen eines zu befestigenden Elements im Inneren sowie eine flanschartige Erweiterung mit einer Senkung, die derart ausgestaltet ist, dass das Verbindungselement durch Füllen der Senkung mit einem geeigneten Befestigungsmittel an der Oberfläche befestigbar ist.

Ein weiteres entsprechendes Verbindungselement zum Aufkleben auf einer Bauteiloberfläche ist in WO 2012/107240 A1 beschrieben. Das Verbindungelement zum Aufkleben auf einer Bauteiloberfläche umfasst einen Haltebolzen mit einem Bolzenabschnitt, an dem ein Strukturbauteil befestigbar ist. Eine Verankerung des Haltebolzens ist in einem Teller aus mit Licht durchstrahlbarem Material derart befestigt, dass auf Grund der verdrehungshemmenden und einer auszugshemmenden Form der Verankerung eine verlässliche Verbindung zwischen Haltebolzen und Teller entsteht.

Bei diesen Verbindungselementen wird ein mit Licht durchstrahlbares Material verwendet. Nur auf diese Weise ist sichergestellt, dass eine ausreichende Vorfixierung des Verbindungselements mittels der Bestrahlung mit Licht erfolgt.

Zusätzlich sind Verbindungselemente bekannt, die aus mit Licht durchstrahlbaren Material bestehen und zum Zuführen von Klebstoff eine Öffnung im Basiselement aufweisen. Ebenso sind Verbindungselemente aus mit Licht durchstrahlbaren Material bekannt, die eine Überströmöffnung für Klebstoff im Basiselement aufweisen.

Ein besonderes Anwendungsgebiet mit im Vergleich zu anderen Anwendungsgebieten hohen dynamischen Belastungen, insbesondere Vibrationen, ist die Luftfahrtindustrie. Hier bestehen, neben den Anforderungen an die herzustellende Verbindung aufgrund der auftretenden dynamischen Belastungen auch besondere Anforderungen an das verwendete Bauteilmaterial. Die in diesem technischen Gebiet verwendeten Materialien für Verbindungselemente sind üblicherweise nicht mit Licht durchstrahlbar. Daher ist die Verwendung eines mittels Licht härtenden Klebstoffs nach derzeitigem Stand der Technik nicht möglich.

Ein Befestigungselement zur Befestigung an einem Substrat durch einen schnell abbindenden Lichthärtungsklebstoff ist in US 2002/2134489 A1 beschrieben. Das Befestigungselement hat einen UV-transparenten Flansch zum Aufbringen auf den Untergrund und ein UV-opakes Klebstoffreservoir zum Aufnehmen des Klebstoffs im Befestigungselement. Beim Drücken des Befestigungselements auf den Untergrund wird der Klebstoff in die Grenzfläche zwischen dem Flansch und dem Substrat zum Aushärten durch UV-Strahlung ausgestoßen.

In US 2012/261066 A1 ist ein Verfahren zum Erzeugen einer versiegelten Vorrichtung beschrieben. Das Verfahren umfasst die Schritte des Bereitstellens einer Struktur, die aus mindestens zwei benachbarten Teilen besteht, die ein Gehäuse bilden und eine Kontaktfläche dazwischen aufweisen. Mindestens ein Teil der Struktur besteht aus einem Material, das für das bloße Auge im Wesentlichen undurchsichtig erscheint und für Licht im Wesentlichen transparent ist. Ein lichthärtbarer Klebstoff wird auf die Kontaktfläche aufgebracht, und Licht wird übertragen, um den lichthärtbaren Klebstoff zu härten, um eine hermetische Abdichtung an der Kontaktfläche zwischen den mindestens zwei benachbarten Teilen zu bilden.

Ein Verfahren zum Befestigen von Strukturen unter Verwendung von Klebstoffen, die bei ultraviolettem und sichtbarem Licht härten ist in US 2014/036353 A1 beschrieben. Zwischen den miteinander zu verbindenden Strukturen ist eine Klebstoffschicht angeordnet. Eine Lichtquelle erzeugt ultraviolettes Licht und die Strukturen weisen eine für ultraviolettes Licht transparente Struktur auf, durch die das ultraviolette Licht hindurchgeht, um den Klebstoff zu beleuchten und zu härten. Die UV-transparente Struktur kann eine von mehreren Aufnahmen von spritzgegossenem Kunststoff in der Struktur bilden, kann unter Verwendung eines Kunststoffs gebildet werden, der bei sichtbaren Wellenlängen undurchsichtig ist, oder kann eine Beschichtung wie eine Metallbeschichtung aufweisen, um die Reflexion ultravioletter Strahlung auf den Kleber zu unterstützen. Perforationen in der Beschichtung können verwendet werden, um ultraviolette Strahlung auf den Klebstoff zu leiten.

Schließlich beschreibt US 2013/119191 A1 tragende Strukturen aus Polymermatrix-Verbundwerkstoffen (PMC) und Verfahren zu ihrer Herstellung. Die Strukturen werden aus mindestens einer geformten Platte hergestellt, die aus einer kontinuierlichen Faserverstärkung in einer thermoplastischen Harzmatrix besteht. Die geformte Platte wurde thermogeformt, um eine im Wesentlichen konstante Querschnittsdicke und Abschnitte zu haben, die in verschiedenen Ebenen liegen und durch eine oder mehrere Biegungen miteinander verbunden sind. Die geformte Platte wird bearbeitet, um ihre Form zu ändern und optional mehrere separate Unterkomponenten daraus zu erzeugen. Die bearbeitete geformte Platte kann die gesamte Struktur bilden, oder die Struktur kann durch Verbinden der bearbeiteten geformten Platte mit anderen geformten Platten oder durch Verbinden von zwei oder mehr der Unterkomponenten gebildet werden. Die Struktur kann an einem Flugzeugtriebwerk installiert werden, um Komponenten am Triebwerk zu sichern.

Die Aufgabe der vorliegenden Erfindung ist daher, ein Verbindungselement zum Aufkleben auf einer Bauteiloberfläche eines ersten Bauteils breitzustellen, das insbesondere für Anwendungen in der Luftfahrtindustrie geeignet ist und im Vergleich zu den bisher in diesem technischen Gebiet bekannten Verbindungselementen effizienter befestigbar ist.

### 3. Zusammenfassung der Erfindung

Die obige Aufgabe wird gelöst durch ein Verbindungselement zum Aufkleben auf einer Bauteiloberfläche gemäß dem unabhängigen Patentanspruch 1, ein erstes Bauteil mit einem darauf aufgeklebten Verbindungselement gemäß dem unabhängigen Patentanspruch 9, eine Anordnung bestehend aus einem ersten und einem zweiten Bauteil, die über ein Verbindungselement verbunden sind, gemäß dem unabhängigen Patentanspruch 10, ein Herstellungsverfahren eines Verbindungselements gemäß dem unabhängigen Patentanspruch 11 sowie ein Verfahren zur Befestigung eines ersten Bauteils an einem zweiten Bauteil mittels eines Verbindungselements gemäß dem unabhängigen Patentanspruch 13. Vorteilhafte Ausführungsformen und Weiterentwicklungen ergeben sich aus der nachfolgenden Beschreibung, den Zeichnungen sowie den anhängigen Patentansprüchen.

In einer ersten Alternative eines erfindungsgemäßen Verbindungselements zum Aufkleben auf einer Bauteiloberfläche eines ersten Bauteils, sodass mittels des Verbindungselements ein zweites Bauteil am ersten Bauteil befestigbar ist, umfasst das Verbindungselement ein Basiselement, das eine Klebeseite mit einer Klebefläche sowie eine Montagestruktur zur Verbindung mit dem zweiten Bauteil aufweist, wobei die Montagestruktur auf einer der Klebeseite gegenüberliegenden Seite des Basiselements oder lateral dazu angeordnet ist, und das Basiselement besteht aus einem thermoplastischem Kunststoff mit einer Dauergebrauchstemperatur von mindestens 130 °C, der schlecht oder nicht mit Licht durchstrahlbar ist, und das Basiselement weist mindestens einen Durchstrahlbereich auf, so dass das Basiselement im Durchstrahlbereich mit Licht derart durchstrahlbar ist, dass Lichtenergie das Basiselement durchdringt, wobei das Basiselement im Durchstrahlbereich im Querschnitt eine geringere Dicke aufweist und ein Transmissionsgrad im Durchstrahlbereich beträgt mindestens 20 % bei einer Wellenlänge des Lichts zwischen 320 und 500 nm.

Das Basiselement besteht somit aus einem thermoplastischen Kunststoff aus dem Bereich der Hochleistungskunststoffe, der nicht oder schlecht mit Licht durchstrahlbar ist. Insbesondere im Bereich der Luftfahrtindustrie werden aus technologischen sowie aus Kostengründen vermehrt thermoplastischen Kunststoffe aus dem Bereich der Hochleistungskunststoffe eingesetzt. Der Begriff Hochleistungskunststoff oder Hochleistungsthermoplast basiert auf einer anwendungsbezogenen, ingenieurstechnischen Einteilung der thermoplastischen Kunststoffe. Hierbei werden generell drei Gebiete unterschieden, nämlich die Standardkunststoffe, die technischen Kunststoffe und die Hochleistungskunststoffe.

Die Hochleistungskunststoffe erfüllen dabei höhere Ansprüche als die Standard- und die technischen Kunststoffe. Insbesondere weisen sie bessere mechanische Eigenschaften, eine höhere Chemikalien- und/oder eine höhere Wärmebeständigkeit auf. Speziell durch die höhere Wärmebeständigkeit wird jedoch oft ihre Verarbeitung erschwert und häufig sind spezielle Maschinen hierfür erforderlich. Weiterhin sind Hochleistungskunststoffe oftmals auf eine bestimmte Eigenschaft spezialisiert, wie beispielsweise die Wärmeformbeständigkeit. Damit stehen sie im Gegensatz zu den technischen Kunststoffen, die ein breites Funktionsspektrum abdecken.

Alle Hochleistungskunststoffe enthalten aromatische Strukturen. Aromatische Strukturen vereinen die beiden wichtigsten Merkmale für die Widerstandsfähigkeit gegen hohe Temperaturen. Einerseits sind sie oxidationsbeständig, da die aromatische Kohlenstoff-Wasserstoff-Bindung deutlich stabiler ist als die aliphatische Kohlenstoff-Wasserstoff-Bindung, wodurch die bei einer thermischen Zersetzung oder Feuer auftretende Radikalbildung erschwert wird. Andererseits ist die Kettensteifheit aromatischer Polymere größer als die von aliphatischen Polymeren, was die Glasübergangstemperatur bzw. im Fall von kristallinen Polymeren den Kristallitschmelzpunkt steigert und die Löslichkeit verringert.

Wie oben angedeutet ist insbesondere die thermische Stabilität eine zentrale Eigenschaft der Hochleistungskunststoffe. Ausgehend von den Eigenschaften der Standardkunststoffe können mechanische und thermische Verbesserungen bereits durch die Zugabe von Verstärkungsstoffen wie Glas- und Kohlenstofffasern, den Zusatz von Stabilisatoren und durch eine Erhöhung des Polymerisationsgrades erzielt werden. Die im Bereich der Hochleistungskunststoffe vorhandene Dauergebrauchstemperatur von mindestens 130 °C wird durch das Ersetzen von aliphatischen durch aromatische Einheiten erreicht. Der Begriff Dauergebrauchstemperatur bezeichnet hierbei die maximale Temperatur, bei der der jeweilige Kunststoff in heißer Luft nach 20.000 Stunden Lagerung höchstens 50 % seiner Ausgangseigenschaften verloren hat. Ergänzend wird in dieser Hinsicht auf die DIN IEC 216 sowie die DIN EN 60216 verwiesen.

Eine höhere Dauergebrauchstemperatur lässt sich durch einen vollständigen Verzicht auf aliphatische Elemente und eine enge Verknüpfung von Aromaten durch funktionelle Gruppen wie Ether-, Sulphon- oder Imid-Gruppen erreichen, so dass Dauergebrauchstemperaturen von mindestens 200 °C bis mindestens 260 °C erzielbar sind. Daher weist der thermoplastische Kunststoff in einer bevorzugten Ausführungsform eine Dauergebrauchstemperatur von mindestens 150 °C, vorzugsweise mindestens 170 °C und besonders bevorzugt von mindestens 190 °C auf.

Um das Verbindungselement aus diesem Hochleistungskunststoff nun auf effiziente Weise verarbeiten zu können, ist erfindungsgemäß vorgesehen, dass im Basiselement ein Durchstrahlbereich vorhanden ist. Im Durchstrahlbereich ist daher auch das Material des Basiselements vorhanden, allerdings in einer geringeren Dicke verglichen mit den benachbarten Bereichen. Die Dicke ist dabei so gewählt, dass der Transmissionsgrad von Licht mit einer Wellenlänge zwischen 320 und 500 nm mindestens 20 % beträgt. Vorzugsweise beträgt der Transmissionsgrad mindestens 30 %, besonders bevorzugt mindestens 40 % und insbesondere bevorzugt mindestens 50%.

Der Transmissionsgrad T, eine Materialeigenschaft, ist definiert als der Quotient zwischen der Wellenintensität I hinter und der Intensität I₀ vor dem Hindernis, d.h. hier dem Durchstrahlbereich. Der Transmissionsgrad ist somit ein Maß für "durchgelassene" Intensität und nimmt Werte zwischen 0 und 1 bzw. 100% an. Der Transmissionsgrad hängt u. a. ab von der Dicke im Durchstrahlbereich, von der Wellenlänge des Lichts und vom Einfallswinkel des Lichts. Das Erreichen des Transmissionsgrads von mindestens 20 % bezieht sich vorliegend auf einen senkrecht in den Durchstrahlbereich eintretenden Lichtstrahl, wobei das Licht eine Wellenlänge im Bereich zwischen 320 und 500 nm aufweist.

Aufgrund dieses vorhandenen Durchstrahlbereichs kann mittels Lichtstrahlung härtender Klebstoff verwendet werden, so dass beispielsweise eine Vorfixierung ohne die Verwendung einer Klebebrücke oder einer ähnlichen Vorrichtung realisierbar ist. Dies gestaltet die Verwendung des Verbindungselements effizienter und wird nachfolgend anhand einer entsprechenden Befestigung an einem ersten Bauteil erläutert.

Bei dem ersten Bauteil handelt es sich insbesondere um ein Strukturbauteil, wie beispielsweise einen Flugzeugflügel oder einen Flugzeugrumpf. Hieran soll mittels des Verbindungselements ein zweites Bauteil angebracht und/oder in einem Abstand dazu gehalten werden. Bei dem zweiten Bauteil handelt es sich daher um ein Anbauteil, wie beispielsweise eine Verkleidung oder ähnliches.

Zunächst wird ein mittels Lichtstrahlen härtender Klebstoff auf die Klebeseite des Basiselements und/oder das erste Bauteil aufgetragen. Danach wird die Klebeseite des Verbindungselements auf dem ersten Bauteil angeordnet. Anschließend erfolgt ein Bestrahlen der Anordnung aus erstem Bauteil und darauf angeordnetem Verbindungselement mit Licht, so dass der Klebstoff im Durchstrahlbereich mindestens eine Vorfixierung des Verbindungselements realisiert.

Abschließend und vor dem Befestigen des zweiten Bauteils an dem Verbindungselement erfolgt ein Aushärten des Klebstoffs.

Ein Vorteil der ersten Alternative eines erfindungsgemäßen Verbindungselements ist daher, dass das Verbindungselement aus Hochleistungskunststoff besteht, gleichzeitig aber unter Verwendung eines mittels Licht härtenden Klebstoffs am ersten Bauteil befestigbar ist. Ein gesondertes Element, wie eine Klebebrücke, ist im Vergleich zum Stand der Technik nicht erforderlich. Auch ist die Materialauswahl nicht auf ein mit Licht durchstrahlbares Material im Gegensatz zum Stand der Technik begrenzt. Somit sind Verbindungselemente für einen größeren Einsatzbereich zugänglich, der vorher aufgrund der Anforderung an das Material als mit Licht durchstrahlbar nicht realisierbar war.

In einer bevorzugten Ausführungsform des Verbindungselements ist ein Übergang zum Durchstrahlbereich stufenlos, insbesondere kontinuierlich, ausgebildet. Mit anderen Worten ist der Übergang von einem Bereich benachbart des Durchstrahlbereichs zum Durchstrahlbereich somit fließend gestaltet, d.h. stufenlos. Häufig strahlen die verwendeten Lichtquellen nicht ausschließlich orthogonal auf die Klebfläche, sondern immer mit Abstrahlwinkeln bis zu 120° Kegelwinkel. Daher würden Stufen oder 90° Wandungen im Übergang zum Durchstrahlbereich beispielswiese zu einer unerwünschten Schattenbildung im Randbereich führen. Diese Schattenbildung ist aufgrund der stufenlosen Ausgestaltung zumindest reduziert.

In einer weiteren bevorzugten Ausführungsform des Verbindungselements beträgt die Dicke im Durchstrahlbereich höchstens 50 % der Dicke des Basiselements benachbart zum Durchstrahlbereich. Vorzugsweise beträgt die Dicke im Durchstrahlbereich höchstens 40 %, besonders bevorzugt 30 % und noch weiter bevorzugt höchstens 20 % der Dicke des Basiselements benachbart zum Durchstrahlbereich oder einer Grundwandstärke des Basiselements. Dies ist darin begründet, dass die Befestigung besonders effizient erfolgen kann, wenn die Dicke im Durchstrahlbereich besonders dünn ist und der Transmissionsgrad auf diese Weise erhöht ist.

In einer weiteren bevorzugten Ausführungsform, und insbesondere wenn das Material des Verbindungselements schlecht durchstrahlbar ist, dann ist es vorteilhaft, wenn der Transmissionsgrad im Durchstrahlbereich im Vergleich zum übrigen Basiselement um mindestens 50 % erhöht ist. Auch mit dieser Ausgestaltung kann die Befestigung besonders effizient erfolgen.

Vorteilhafterweise ist der Durchstrahlbereich des Verbindungselements so ausgebildet, dass eine Vertiefung auf der Klebeseite und/oder auf der der Klebeseite gegenüberliegenden Seite des Basiselements vorgesehen ist. Bei einer Vertiefung auf der Klebeseite des Basiselements ist die gegenüberliegende Seite des Durchstrahlbereichs bündig mit dem benachbarten Bereich des Basiselements. Auf diese Weise kann Klebstoff in die Vertiefung eindringen und eine besonders sichere Befestigung des Verbindungselements ist realisierbar. Bei einer Vertiefung auf der der Klebeseite gegenüberliegenden Seite ist der Durchstrahlbereich an der Klebeseite bündig mit dem benachbarten Bereich des Basiselements. Somit ist auf diese Weise eine durchgängige, ebene Klebefläche erzeugbar, die besonders vorteilhaft ist. In einer dritten Variante kann eine Vertiefung sowohl von der Klebeseite als auch von der gegenüberliegenden Seite des Basiselements vorgesehen sein. Beispielsweise ist das Material im Durchstrahlbereich genau mittig bezogen auf die benachbarten Bereiche des Basiselements angeordnet, wenn es im Querschnitt betrachtet wird. Somit wird ebenfalls eine Vertiefung für die bessere Verankerung des Klebstoffs bereitgestellt, wobei die der Klebeseite gegenüberliegende Seite des Basiselements ebenfalls eine Vertiefung aufweist. Hierdurch sind vorteilhafte optische Effekte erzielbar, die ein Bündeln oder Streuen der Lichtstrahlen unterstützen.

In einer zweiten Alternative eines erfindungsgemäßen Verbindungselements zum Aufkleben auf einer Bauteiloberfläche eines ersten Bauteils, sodass mittels des Verbindungselements ein zweites Bauteil am ersten Bauteil befestigbar ist, weist das Verbindungselement auf: ein Basiselement, das eine Klebeseite mit einer Klebefläche sowie eine Montagestruktur zur Verbindung mit dem zweiten Bauteil aufweist, wobei die Montagestruktur auf einer der Klebeseite gegenüberliegenden Seite des Basiselements oder lateral dazu angeordnet ist, und das Basiselement besteht aus einem thermoplastischem Kunststoff mit einer Dauergebrauchstemperatur von mindestens 130 °C, der schlecht oder nicht mit Licht durchstrahlbar ist, und das Basiselement weist mindestens einen Durchstrahlbereich auf, so dass das Basiselement im Durchstrahlbereich mit Licht derart durchstrahlbar ist, dass Lichtenergie das Basiselement durchdringt, wobei der Durchstrahlbereich durch einen Durchbruch gebildet wird.

Die zweite Alternative des erfindungsgemäßen Verbindungselements unterscheidet sich somit von der ersten Alternative des erfindungsgemäßen Verbindungselements dadurch, dass im Durchstrahlbereich ein Durchbruch vorhanden ist, anstelle einer geringeren Dicke des Materials des Basiselements. Zu den grundlegenden Eigenschaften und der Funktionsweise wird daher auf die obigen Ausführungen zur ersten Alternative des erfindungsgemäßen Verbindungselements verwiesen.

Die Verwendung von Durchbrüchen ist insbesondere bevorzugt bei Materialien, die im benötigten Lichtspektrum, d.h. hier im Bereich zwischen 320 nm und 500 nm, keinerlei Transparenz aufweisen, auch nicht bei einer geringen Materialdicke. Somit ist ein Vorteil dieser Alternative, dass ebenfalls solche Materialien in Kombination mit einem mittels Licht härtenden Klebstoff verwendbar sind.

In einer bevorzugten Ausführungsform der zweiten Alternative des erfindungsgemäßen Verbindungselements ist der Durchbruch mittels einer Beschichtung oder eines Stopfens verschlossen, die oder der aus einem mit Licht durchstrahlbaren Material besteht. Auf diese Weise wird ein Austreten von Klebstoff über den Durchbruch verhindert. Zudem kann auf diese Weise eine ebene Klebefläche realisiert werden. Dabei ist es besonders vorteilhaft, wenn die Beschichtung oder der Stopfen den Durchbruch von der Klebeseite des Basiselements her verschließen. Auf diese Weise wird eine durchgängige Klebefläche geschaffen, wie oben in Verbindung mit der ersten Alternative des erfindungsgemäßen Verbindungselements ausgeführt.

Die nachfolgend beschriebenen bevorzugten Ausführungsformen beziehen sich sowohl auf die erste als auch auf die zweite Alternative des erfindungsgemäßen Verbindungselements. Dies bedeutet, dass jedes der nachfolgend beschriebenen Merkmale mit beiden Alternativen realisierbar ist.

So ist es weiterhin bevorzugt, dass die Klebefläche eine Vielzahl an Vorsprüngen aufweist. Auf diese Weise wird, insbesondere wenn keine Vertiefungen auf der Klebeseite vorgesehen sind, eine gesonderte Struktur zur Verbesserung der Befestigung am ersten Bauteil geschaffen.

In einer weiteren vorteilhaften Ausführungsform weist der Durchstrahlbereich eine längliche Form auf, die insbesondere gebogen ist. Mit dieser Ausgestaltung werden die Durchstrahlbereiche im Vergleich zu punktuellen Durchstrahlbereichen vergrößert und es kann mehr Licht während eines Bestrahlens mit Licht zum Klebstoff gelangen. In diesem Zusammenhang ist es daher ebenfalls bevorzugt, wenn das Verbindungselement zusätzlich oder alternativ eine Mehrzahl an Durchstrahlbereichen aufweist. Bei einer Mehrzahl an Durchstrahlbereichen ist es besonders vorteilhaft, dass die Klebefläche kreisförmig ist und mindestens zwei Durchstrahlbereiche auf einem gedachten gemeinsamen Kreis um einen Mittelpunkt der Klebefläche angeordnet sind. Aufgrund dieser genau definierten Anordnung ist ein Befestigen des Verbindungselements besser steuerbar.

In einer weiteren bevorzugten Ausführungsform des Verbindungselements ist am Basiselement ein Angriffsmerkmal vorgesehen, so dass das Verbindungselement automatisiert verarbeitbar ist. Ein Vorteil dieser Ausführungsform ist insbesondere, dass das Verbindungselement aufgrund des Angriffsmerkmals vollautomatisiert verarbeitbar ist, d.h. insbesondere am ersten Bauteil vollautomatisiert befestigbar ist.

Gemäß einer weiteren vorteilhaften Ausführungsform des Verbindungselements weist die Montagestruktur auf: einen Bolzen mit Außengewinde, der insbesondere auf einer der Klebeseite gegenüberliegenden Seite des Basiselements angeordnet ist, eine Buchse mit Innengewinde, die insbesondere auf einer der Klebeseite gegenüberliegenden Seite des Basiselements angeordnet ist, oder eine Mutter oder Öffnung, vorzugsweise mit Innengewinde, die lateral am Basiselement bezogen auf die Klebeseite angeordnet ist. In Abhängigkeit von der verwendeten Montagestruktur sind damit unterschiedliche Aufgaben mit dem Verbindungselement realisierbar. Beispielsweise kann das Verbindungselement zur Befestigung eines zweiten Bauteils, insbesondere eines Anbauteils wie einer Verkleidung verwendet werden, oder als Abstandshalter.

Ein erfindungsgemäßes erstes Bauteil umfasst ein darauf aufgeklebtes erfindungsgemäßes Verbindungselement gemäß einer der beiden oben beschriebenen Alternativen. Da das erste Bauteil auf diese Weise das Verbindungselement umfasst, wird im Hinblick auf die sich ergebenden Vorteile auf die obigen Ausführungen verwiesen, um Wiederholungen zu vermeiden.

Eine erfindungsgemäße Anordnung besteht aus einem ersten und einem zweiten Bauteil, die über ein erfindungsgemäßes Verbindungselement gemäß einer der beiden oben beschriebenen Alternativen verbunden sind. Im Hinblick auf die sich daraus ergebenden Vorteile wird ebenfalls auf die obigen Ausführungen verwiesen.

Ein erfindungsgemäßes Herstellungsverfahren eines erfindungsgemäßen Verbindungselements weist die Schritte auf: Bereitstellen einer Form, insbesondere einer Spritzgussform, die komplementär zu dem auszubildenden Verbindungselement ausgebildet ist, Füllen der Form mit einem thermoplastischem Kunststoff mit einer Dauergebrauchstemperatur von mindestens 130 °C, der schlecht oder nicht mit Licht durchstrahlbar ist, und Aushärten des Kunststoffs sowie Entnehmen des Verbindungselements aus der Form. Mit dem erfindungsgemäßen Herstellungsverfahren sind beide Alternativen des erfindungsgemäßen Verbindungselements herstellbar. Daher wird bezüglich der sich ergebenden Vorteile auf die entsprechenden obigen Ausführungen verwiesen.

In einer bevorzugten Ausführungsform des Herstellungsverfahrens, wobei der Durchstrahlbereich durch einen Durchbruch gebildet ist, weist das Herstellungsverfahren den weiteren Schritt auf: Anbringen einer Beschichtung oder eines Stopfens am Durchbruch, die oder der aus einem mit Licht durchstrahlbaren Material besteht. Auf diese Weise wird ein Austreten von Klebstoff über den Durchbruch verhindert. Zudem ist auf diese Weise eine ebene Klebefläche realisierbar.

Ein erfindungsgemäßes Verfahren zur Befestigung eines ersten Bauteils an einem zweiten Bauteil mittels eines erfindungsgemäßen Verbindungselements umfasst die Schritte: Anordnen eines mittels Lichtstrahlen härtenden Klebstoffs auf der Klebeseite des Basiselements und/oder dem ersten Bauteil, Anordnen der Klebeseite des Verbindungselements auf dem ersten Bauteil, Bestrahlen der Anordnung aus erstem Bauteil und darauf angeordnetem Verbindungselement mit Licht, so dass der Klebstoff im Durchstrahlbereich mindestens eine Vorfixierung des Verbindungselements realisiert, sowie Aushärten des Klebstoffs. Mit dem erfindungsgemäßen Verfahren ist das erfindungsgemäße Verbindungselement am ersten Bauteil befestigbar. Dabei sorgt das Bestrahlen mit Licht zumindest für eine Vorfixierung des Verbindungselements vor dem Aushärten. Insbesondere bei Verwendung eines mittels Licht aktivierbaren Klebstoffs kann auch aufgrund der Bestrahlung mit Licht eine Kettenreaktion zum Aushärten des Klebstoffs initiiert werden. Dies wird später detailliert beschrieben. Bezüglich der sich ergebenden Vorteile verweisen wir auf die Ausführungen zum erfindungsgemäßen Verbindungselement.

In einer besonders bevorzugten Ausführungsform des Verfahrens umfasst das Verfahren den weiteren Schritt: Anordnen eines zweiten Bauteils am Montagebereich nach dem Aushärten des Klebstoffs. Auf diese Weise wird mittels des Verbindungselements eine Verbindung zwischen dem ersten und dem zweiten Bauteil hergestellt, wie es oben bereits beschrieben wurde.

Es ist ebenfalls bevorzugt, dass für den Schritt des Bestrahlens mit Licht Licht mit einer Wellenläge von 320-500 nm verwendet wird. Der Klebstoff ist vorzugsweise ausgewählt aus einer der Gruppen umfassend: radikalisch härtende Klebstoffe, kationisch härtende Klebstoffe, dual härtende Klebstoffe oder einer Kombination davon. Bei radikalisch härtenden Klebstoffen werden durch die Einwirkung von Licht-Strahlung, insbesondere UV-Strahlung, die Photo-Initiatoren in freie Radikale gespalten (homolytische Spaltung) oder sie abstrahieren Wasserstoffatome aus Kohlenwasserstoffen und erzeugen so Radikale (Norrish-Reaktion Typ II). Diese Radikale leiten die Bildung von Polymerketten ein. Ein Beispiel für solche Klebstoffe sind UV-Acrylate. Im Unterschied zu den radikalisch härtenden Klebstoffen können kationisch härtende Klebstoffe nach einer ausreichenden Aktivierung mit Licht-Strahlung auch im Dunklen weiterhärten. Dual härtende Klebstoffe, d.h. Klebstoffe mit mehr als einem Härtungsmechanismus, sind insbesondere geeignet für Anwendungen in echten Schattenbereichen, die keiner Strahlungsquelle zugänglich sind. Die Aushärtung im Schattenbereich kann dann beispielsweise durch eine Wärmezufuhr eintreten.

### 4. Kurzzusammenfassung der Zeichnungen

Nachfolgend wird die vorliegende Erfindung unter Bezugnahme auf die Zeichnungen detailliert beschrieben. Gleiche Bezugszeichen in den Zeichnungen bezeichnen dabei gleiche Bauteile und/oder Elemente. Es zeigen:

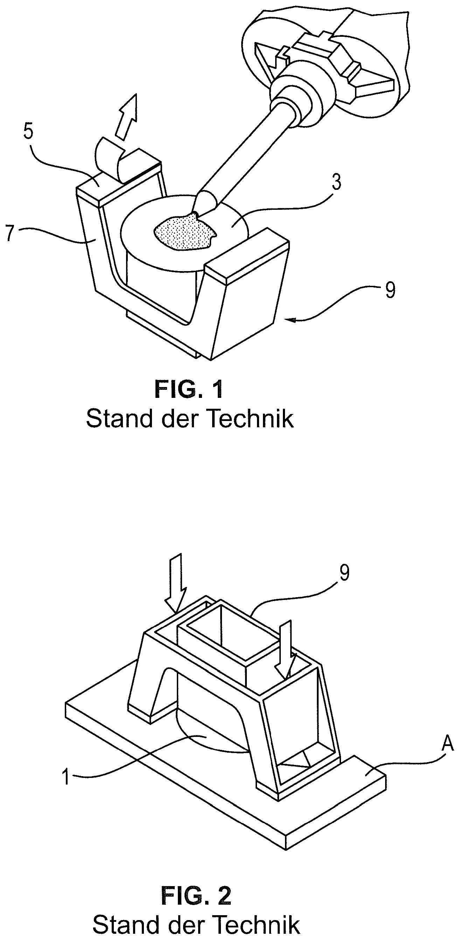

- Figur 1: einen ersten Schritt eines Befestigungsverfahrens gemäß Stand der Technik für ein Verbindungselement,
- Figur 2: einen nachfolgenden zweiten Schritt des Befestigungsverfahrens gemäß Stand der Technik für ein Verbindungselement,

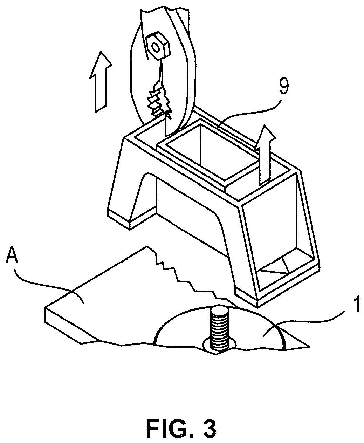

- Figur 3: einen dritten Schritt des Befestigungsverfahrens gemäß Stand der Technik für ein Verbindungselement,

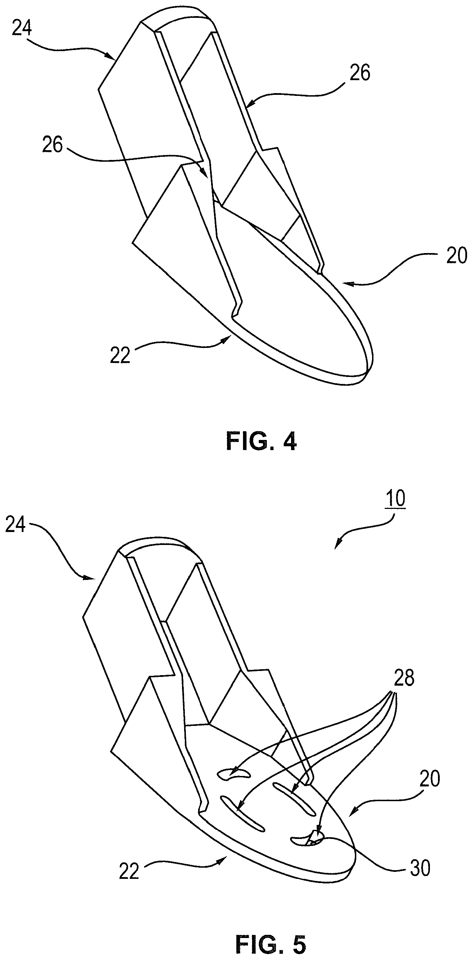

- Figur 4: ein Verbindungselement zur Verdeutlichung des Aufbaus,
- Figur 5: eine erste Ausführungsform eines erfindungsgemäßen Verbindungselements,

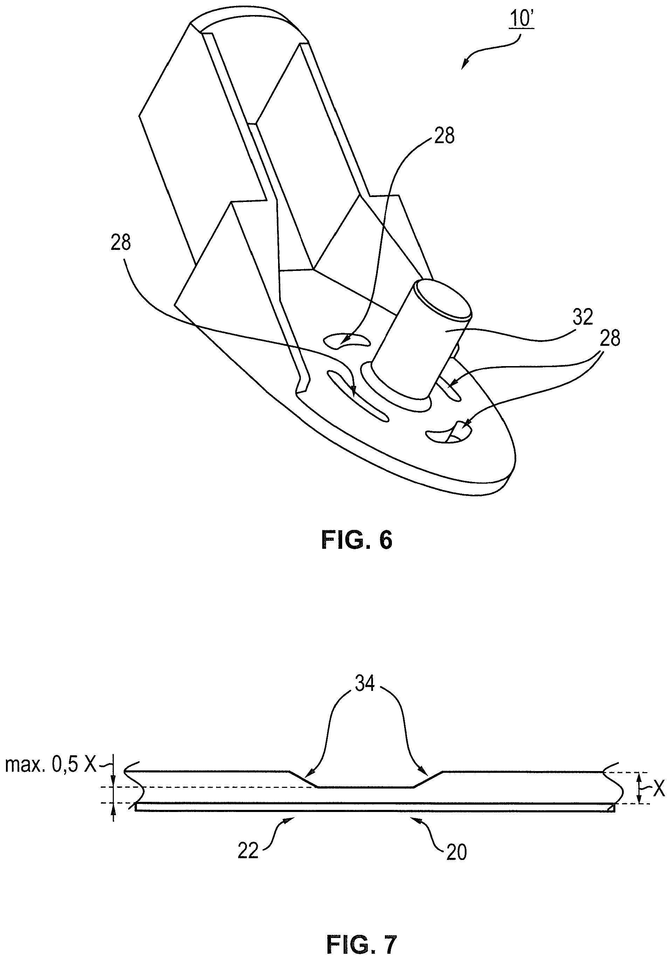

- Figur 6: eine zweite Ausführungsform eines erfindungsgemäßen Verbindungselements,
- Figur 7: ein Querschnitt durch einen Bereich einer Ausführungsform eines erfindungsgemäßen Verbindungselements mit einer geringeren Dicke im Durchstrahlbereich,

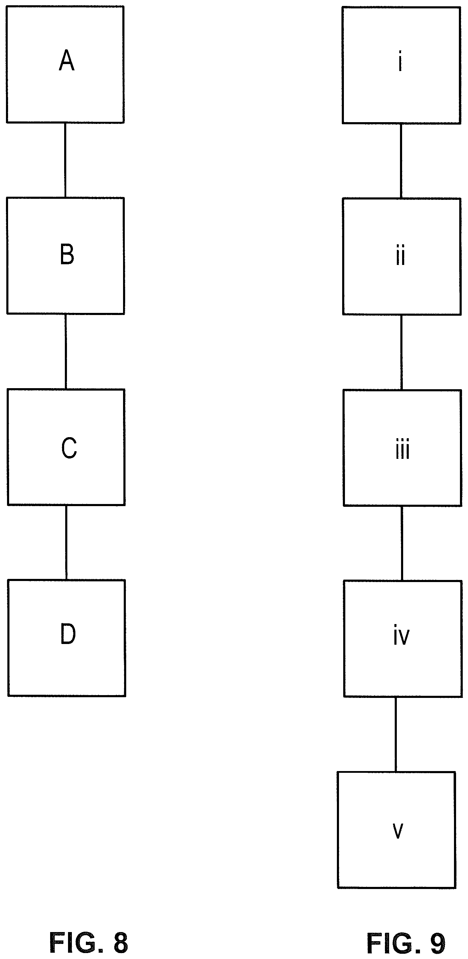

- Figur 8: ein Flussdiagramm einer Ausführungsform eines erfindungsgemäßen Herstellungsverfahrens eines Verbindungselements und
- Figur 9: ein Flussdiagramm einer Ausführungsform eines erfindungsgemäßen Befestigungsverfahrens eines Verbindungselements.

### 5. Detaillierte Beschreibung der bevorzugten Ausführungsformen

Eine Ausführungsform eines erfindungsgemäßen Verbindungselements 10 wird nachfolgend insbesondere unter Bezugnahme auf die Figur 5 beschrieben. Figur 4 zeigt erläuternd den Grundaufbau zur besseren Verständlichkeit.

Das Verbindungselement 10 wird bei der Verwendung auf eine Bauteiloberfläche eines ersten Bauteils, insbesondere eines Strukturbauteils wie beispielsweise einem Flugzeugflügel oder einem Flugzeugrumpf, aufgeklebt. Daher ist mittels des Verbindungselements 10 ein zweites Bauteil, insbesondere ein Anbauteil wie beispielsweise eine Verkleidung, am ersten Bauteil befestigbar.

Das Verbindungselement 10 weist ein Basiselement 20 auf. Das Basiselement 20 verfügt über eine Klebeseite mit einer Klebefläche 22 sowie eine Montagestruktur 24 zur Verbindung mit dem zweiten Bauteil. In den dargestellten Ausführungsformen ist die Klebefläche 22 kreisförmig ausgebildet und die Montagestruktur 24 ist seitlich zur Klebeseite angeordnet. Zudem verfügt das Verbindungselement 10 über eine Versteifung 26, die benachbart zur Montagestruktur 24 angeordnet ist. Die Montagestruktur 24 kann beispielsweise eine Mutter oder Öffnung aufweisen, vorzugsweise mit Innengewinde.

Es ist auch denkbar, dass die Montagestruktur auf der der Klebeseite gegenüberliegenden Seite des Basiselements 20 angeordnet ist. Hierbei kann die Montagestruktur beispielsweise einen Bolzen mit Außengewinde oder eine Buchse mit Innengewinde aufweisen. In Abhängigkeit von der verwendeten Montagestruktur sind damit unterschiedliche Aufgaben mit dem Verbindungselement realisierbar. Beispielsweise kann das Verbindungselement zur Befestigung eines zweiten Bauteils, insbesondere eines Anbauteils wie einer Verkleidung verwendet werden, oder als Abstandshalter.

Bei dem Material des Basiselements 20 handelt es sich um einen thermoplastischen Kunststoff mit einer Dauergebrauchstemperatur von mindestens 130 °C, insbesondere einen Hochleistungskunststoff, der vorzugsweise für die Verwendung im Bereich der Luftfahrtindustrie vorgesehen ist. Das Material ist daher schlecht oder nicht mit Licht durchstrahlbar, was später erläutert wird.

Der Begriff Hochleistungskunststoff oder Hochleistungsthermoplast basiert auf einer anwendungsbezogenen, ingenieurstechnischen Einteilung der thermoplastischen Kunststoffe, die zwischen Standardkunststoffen, technischen Kunststoffen und die Hochleistungskunststoffen unterscheidet. Wie der Name bereits andeutet erfüllen Hochleistungskunststoffe höhere Ansprüche als die Standard- und die technischen Kunststoffe. Insbesondere weisen sie bessere mechanische Eigenschaften, eine höhere Chemikalien- und/oder eine höhere Wärmebeständigkeit auf. Damit stehen sie insbesondere im Gegensatz zu den technischen Kunststoffen, die ein breites Funktionsspektrum abdecken.

Alle Hochleistungskunststoffe enthalten aromatische Strukturen. Da die aromatische Kohlenstoff-Wasserstoff-Bindung deutlich stabiler ist als die aliphatische Kohlenstoff-Wasserstoff-Bindung, wird aufgrund der Oxidationsbeständigkeit die bei einer thermischen Zersetzung oder Feuer auftretende Radikalbildung erschwert. Weiterhin ist die Kettensteifheit aromatischer Polymere größer als die von aliphatischen Polymeren, was die Glasübergangstemperatur bzw. im Fall von kristallinen Polymeren den Kristallitschmelzpunkt steigert und die Löslichkeit verringert. Aromatische Strukturen vereinen daher die beiden wichtigsten Merkmale für die Widerstandsfähigkeit gegen hohe Temperaturen. Die thermische Stabilität ist daher eine zentrale Eigenschaft der Hochleistungskunststoffe.

Ausgehend von den Eigenschaften der Standardkunststoffe können mechanische und thermische Verbesserungen bereits durch die Zugabe von Verstärkungsstoffen wie Glas- und Kohlenstofffasern, den Zusatz von Stabilisatoren und durch eine Erhöhung des Polymerisationsgrades erzielt werden. Die im Bereich der Hochleistungskunststoffe vorhandene Dauergebrauchstemperatur von mindestens 130 °C wird jedoch erst durch das Ersetzen von aliphatischen durch aromatische Einheiten erreicht. Der Begriff Dauergebrauchstemperatur bezeichnet hierbei die maximale Temperatur, bei der der jeweilige Kunststoff in heißer Luft nach 20.000 Stunden Lagerung höchstens 50 % seiner Ausgangseigenschaften verloren hat. Ergänzend wird in dieser Hinsicht auf die DIN IEC 216 sowie die DIN EN 60216 verwiesen.

Eine höhere Dauergebrauchstemperatur lässt sich durch einen vollständigen Verzicht auf aliphatische Elemente und eine enge Verknüpfung von Aromaten durch funktionelle Gruppen wie Ether-, Sulphon- oder Imid-Gruppen erreichen, so dass Dauergebrauchstemperaturen von mindestens 200 °C bis mindestens 260 °C erzielbar sind. Daher weist der thermoplastische Kunststoff in einer bevorzugten Ausführungsform eine Dauergebrauchstemperatur von mindestens 150 °C, vorzugsweise mindestens 170 °C und besonders bevorzugt von mindestens 190 °C auf. Zusätzlich oder alternativ bevorzugt ist der thermoplastische Kunststoff aus der Gruppe der amorphen Kunststoffe ausgewählt. Amorph ist hierbei generell die Bezeichnung für den Zustand eines festen Stoffs, in dem die Bausteine, also Atome, Ionen oder Moleküle, keine periodische Anordnung über einen größeren Bereich, die sogenannte Fernordnung, aufweisen. Die amorphen thermoplastischen Kunststoffe sind in der Ausgangsform transparent. Zusätzlich ist ein Bauteil aus amorphem thermoplastischem Kunststoff hart im Vergleich zu teilkristallinen thermoplastischen Hochleistungskunststoffen. Ein Nachteil im Vergleich zu den teilkristallinen Kunststoffen ist allerdings, dass er eine geringere Chemikalienbeständigkeit aufweist.

Um das Verbindungselement 10 aus diesem Hochleistungskunststoff in Kombination mit einem Licht härtenden Klebstoff verarbeiten zu können, sind im Basiselement 20 Durchstrahlbereiche 28 vorhanden. Im Durchstrahlbereich 28 ist daher auch das Material des Basiselements vorhanden, allerdings in einer geringeren Dicke verglichen mit der Dicke X der benachbarten Bereiche. Dies wird nachfolgend unter Bezugnahme auf Figur 7 erläutert. Die Dicke des Materials im Durchstrahlbereich 28 ist dabei so gewählt, dass der Transmissionsgrad von Licht mit einer Wellenlänge zwischen 320 und 500 nm mindestens 20 % beträgt. Vorzugsweise beträgt der Transmissionsgrad mindestens 30 %, besonders bevorzugt mindestens 40 % und insbesondere bevorzugt mindestens 50 %.

Der Transmissionsgrad T ist eine Materialeigenschaft und definiert als der Quotient zwischen der Wellenintensität I hinter und der Intensität I₀ vor dem Hindernis, d.h. hier dem Durchstrahlbereich 28. Der Transmissionsgrad ist somit ein Maß für "durchgelassene" Intensität und nimmt Werte zwischen 0 und 1 bzw. 100% an. Der Transmissionsgrad hängt u. a. ab von der Dicke im Durchstrahlbereich 28, von der Wellenlänge des Lichts und vom Einfallswinkel des Lichts. Das Erreichen des Transmissionsgrads von mindestens 20 % bezieht sich vorliegend auf einen senkrecht in den Durchstrahlbereich 28 eintretenden Lichtstrahl, wobei das Licht eine Wellenlänge im Bereich zwischen 320 und 500 nm aufweist.

Aufgrund der vorhandenen Durchstrahlbereiche 28 kann mittels Lichtstrahlung härtender Klebstoff verwendet werden, so dass beispielsweise eine Vorfixierung ohne die Verwendung einer Klebebrücke oder einer ähnlichen Vorrichtung realisierbar ist. Dies gestattet die effiziente Verwendung des Verbindungselements, was auch aus dem später beschriebenen Befestigungsverfahren gemäß einer Ausführungsform der Erfindung hervorgeht.

Im Ergebnis besteht das Verbindungselement 10 daher aus Hochleistungskunststoff, ist aber gleichzeitig unter Verwendung eines mittels Licht härtenden Klebstoffs am ersten Bauteil befestigbar. Ein gesondertes Element, wie eine Klebebrücke, ist im Vergleich zum Stand der Technik nicht erforderlich. Auch ist die Materialauswahl nicht auf ein mit Licht durchstrahlbares Material im Gegensatz zum Stand der Technik begrenzt. Somit sind Verbindungselemente 10 in Kombination mit einem Licht härtenden Klebstoff für einen größeren Einsatzbereich zugänglich, der vorher aufgrund der Anforderung an das Material als mit Licht durchstrahlbar nicht realisierbar war.

In einer nicht dargestellten Alternative des erfindungsgemäßen Verbindungselements sind anstelle der geringeren Dicke im Durchstrahlbereich 28 Durchbrüche vorgesehene. Die Verwendung von Durchbrüchen ist insbesondere bevorzugt bei Materialien, die im benötigten Lichtspektrum, d.h. hier im Bereich zwischen 320 nm und 500 nm, keinerlei Transparenz aufweisen, auch nicht bei einer geringen Materialdicke. Somit ist ein Vorteil dieser Alternative, dass ebenfalls solche Materialien in Kombination mit einem mittels Licht härtenden Klebstoff verwendbar sind. Vorzugsweise ist der Durchbruch mittels einer Beschichtung oder eines Stopfens verschlossen, die oder der aus einem mit Licht durchstrahlbaren Material besteht. Auf diese Weise wird ein Austreten von Klebstoff über den Durchbruch verhindert. Zudem kann auf diese Weise eine ebene Klebefläche realisiert werden. Dabei ist es besonders vorteilhaft, wenn die Beschichtung oder der Stopfen den Durchbruch von der Klebeseite des Basiselements her verschließen. Auf diese Weise wird eine durchgängige Klebefläche geschaffen, wie oben in Verbindung mit der ersten Alternative des erfindungsgemäßen Verbindungselements ausgeführt.

Nun Bezug nehmend auf Figur 7 wird die Ausgestaltung des Durchstrahlbereichs 28 detailliert beschrieben. Ein Übergang 34 zum Durchstrahlbereich 28 ist hier stufenlos ausgebildet. Mit anderen Worten ist der Übergang 34 von einem Bereich benachbart des Durchstrahlbereichs 28 zum Durchstrahlbereich 28 fließend gestaltet. Dies ist darin begründet, dass die verwendeten Lichtquellen das Licht häufig nicht ausschließlich orthogonal auf die Klebfläche strahlen, sondern das Licht oft mit Abstrahlwinkeln von bis zu 120° Kegelwinkel ausstrahlen. Daher würden Stufen oder 90° Wandungen im Übergang 34 zum Durchstrahlbereich 28 beispielswiese zu einer unerwünschten Schattenbildung im Randbereich führen. Diese Schattenbildung ist aufgrund der stufenlosen Ausgestaltung zumindest reduziert.

Zudem beträgt die Dicke im Durchstrahlbereich 28 höchstens 50 % der Dicke X des Basiselements 20 benachbart zum Durchstrahlbereich 28. Es ist ebenfalls bevorzugt, dass die Dicke im Durchstrahlbereich höchstens 40 %, besonders bevorzugt 30 % und noch weiter bevorzugt höchstens 20 % der Dicke X des Basiselements 20 benachbart zum Durchstrahlbereich 28 oder einer Grundwandstärke des Basiselements 20 beträgt. Dies ist darin begründet, dass die Befestigung besonders effizient erfolgen kann, wenn die Dicke im Durchstrahlbereich 28 besonders dünn ist und der Transmissionsgrad auf diese Weise erhöht ist. Dies wird auch dadurch unterstützt, dass, wenn das Material des Verbindungselements 10 schlecht durchstrahlbar ist, der Transmissionsgrad im Durchstrahlbereich 28 im Vergleich zum übrigen Basiselement 20 um mindestens 50 % erhöht ist.

In der dargestellten Ausführungsform ist der Durchstrahlbereich 28 des Verbindungselements 10 so ausgebildet, dass eine Vertiefung 30 auf der der Klebeseite gegenüberliegenden Seite des Basiselements 20 vorgesehen ist. Somit ist auf diese Weise eine durchgängige, ebene Klebefläche erzeugbar, die besonders vorteilhaft ist.

In einer alternativen Ausgestaltung ist die Vertiefung auf der Klebeseite des Basiselements vorgesehen, so dass die gegenüberliegende Seite des Durchstrahlbereichs bündig mit dem benachbarten Bereich des Basiselements. Auf diese Weise kann Klebstoff in die Vertiefung eindringen und es ist eine besonders sichere Befestigung des Verbindungselements realisierbar. In einer dritten Ausgestaltung kann jeweils eine Vertiefung auf der Klebeseite und auf der gegenüberliegenden Seite des Basiselements vorgesehen sein. Beispielsweise ist das Material im Durchstrahlbereich genau mittig bezogen auf die benachbarten Bereiche des Basiselements angeordnet, wenn es im Querschnitt betrachtet wird. Somit wird eine Vertiefung für die bessere Verankerung des Klebstoffs bereitgestellt, wobei die der Klebeseite gegenüberliegende Seite des Basiselements ebenfalls eine Vertiefung aufweist. Hierdurch sind vorteilhafte optische Effekte erzielbar, die ein Bündeln oder Streuen der Lichtstrahlen unterstützen.

Der Durchstrahlbereich 28 weist eine längliche Form auf, die gebogen ist. Mit dieser Ausgestaltung werden die Durchstrahlbereiche 28 im Vergleich zu punktuellen Durchstrahlbereichen vergrößert und es kann mehr Licht während eines Bestrahlens mit Licht zum Klebstoff gelangen. Zudem ist eine Mehrzahl an Durchstrahlbereichen 28 vorhanden, vier in der dargestellten Ausführungsform. Dabei sind in der dargestellten Ausführungsform alle vier Durchstrahlbereiche 28 auf einem gedachten gemeinsamen Kreis um einen Mittelpunkt der Klebefläche angeordnet. Aufgrund dieser genau definierten Anordnung ist ein Befestigen des Verbindungselements besser steuerbar.

In einer anderen Ausführungsform, wie sie in Figur 6 dargestellt ist, weist das Verbindungselements 10' am Basiselement 20 zusätzlich ein Angriffsmerkmal 32 auf, so dass das Verbindungselement 10' automatisiert verarbeitbar ist. Ein Vorteil dieser Ausführungsform ist insbesondere, dass das Verbindungselement 10' aufgrund des Angriffsmerkmals 32 vollautomatisiert verarbeitbar ist, d.h. insbesondere am ersten Bauteil vollautomatisiert befestigbar ist.

Nun bezugnehmend auf Figur 8 wird eine Ausführungsform eines erfindungsgemäßen Herstellungsverfahrens für ein erfindungsgemäßes Verbindungselement 10; 10' beschrieben. Zunächst erfolgt in Schritt A ein Bereitstellen einer Form, insbesondere einer Spritzgussform, die komplementär zu dem auszubildenden Verbindungselement 10; 10' ausgebildet ist. Danach findet in Schritt B ein Füllen der Form mit einem thermoplastischen Kunststoff mit einer Dauergebrauchstemperatur von mindestens 130 °C, der schlecht oder nicht mit Licht durchstrahlbar ist, statt. Abschließend erfolgen in Schritt C ein Aushärten des Kunststoffs sowie ein Entnehmen des Verbindungselements 10; 10' aus der Form.

Sofern der Durchstrahlbereich einen Durchbruch aufweist, ist weiterhin vorgesehen, dass in Schritt D eine Beschichtung oder ein Stopfen am Durchbruch angebracht wird, die oder der aus einem mit Licht durchstrahlbaren Material besteht. Hierbei handelt es sich entweder um einen eigenen nachgelagerten Schritt. Alternativ kann dieser Schritt auch nach dem Aushärten des Kunststoffs des Basiselements und vor dem Entnehmen erfolgen. Auf diese Weise wird ein Austreten von Klebstoff über den Durchbruch verhindert. Zudem ist auf diese Weise eine ebene Klebefläche realisierbar.

In Figur 9 ist eine Ausführungsform eines erfindungsgemäßen Verfahrens zur Befestigung eines ersten Bauteils an einem zweiten Bauteil mittels des Verbindungselements 10; 10' gezeigt. In Schritt i erfolgt zunächst ein Anordnen eines mittels Lichtstrahlen härtenden Klebstoffs auf der Klebeseite des Basiselements 20 und/oder dem ersten Bauteil. Daran schließt sich in Schritt ii ein Anordnen der Klebeseite des Verbindungselements 10; 10' auf dem ersten Bauteil an.

In Schritt iii erfolgt dann ein Bestrahlen der Anordnung aus erstem Bauteil und darauf angeordnetem Verbindungselement 10; 10' mit Licht, so dass der Klebstoff im Durchstrahlbereich 28 mindestens eine Vorfixierung des Verbindungselements 10; 10' realisiert. Das Bestrahlen mit Licht sorgt dabei zumindest für eine Vorfixierung des Verbindungselements 10; 10' vor dem Aushärten. Insbesondere bei Verwendung eines mittels Licht aktivierbaren Klebstoffs kann auch aufgrund der Bestrahlung mit Licht eine Kettenreaktion zum Aushärten des Klebstoffs initiiert werden.

Für den Schritt des Bestrahlens mit Licht wird Licht mit einer Wellenläge von 320-500 nm verwendet. Der Klebstoff ist ausgewählt aus einer der Gruppen umfassend: radikalisch härtende Klebstoffe, kationisch härtende Klebstoffe, dual härtende Klebstoffe oder einer Kombination davon. Bei radikalisch härtenden Klebstoffen werden durch die Einwirkung von Licht-Strahlung, insbesondere UV-Strahlung, die Photo-Initiatoren in freie Radikale gespalten (homolytische Spaltung) oder sie abstrahieren Wasserstoffatome aus Kohlenwasserstoffen und erzeugen so Radikale (Norrish-Reaktion Typ II). Diese Radikale leiten die Bildung von Polymerketten ein. Ein Beispiel für solche Klebstoffe sind UV-Acrylate. Im Unterschied zu den radikalisch härtenden Klebstoffen können kationisch härtende Klebstoffe nach einer ausreichenden Aktivierung mit Licht-Strahlung auch im Dunklen weiterhärten. Dual härtende Klebstoffe, d.h. Klebstoffe mit mehr als einem Härtungsmechanismus, sind insbesondere geeignet für Anwendungen in echten Schattenbereichen, die keiner Strahlungsquelle zugänglich sind. Die Aushärtung im Schattenbereich kann dann beispielsweise durch eine Wärmezufuhr eintreten.

Natürlich ist es in gleicher Weise bevorzugt, das Verbindungselement mit einem Zwei-Komponenten Klebstoff zu befestigen.

Abschließend erfolgt ein Aushärten des Klebstoffs in Schritt iv. In Schritt v wird dann ein zweites Bauteil am Montagebereich nach dem Aushärten des Klebstoffs angeordnet. Auf diese Weise wird mittels des Verbindungselements 10; 10' eine Verbindung zwischen dem ersten und dem zweiten Bauteil hergestellt.

### 6. Bezugszeichenliste

- 1: Verbindungselement
- 3: Klebfläche
- 5: Klebebänder
- 7: Füße
- 9: Klebebrücke

- 10: Verbindungselement
- 20: Basiselement
- 22: Klebefläche
- 24: Montagestruktur
- 26: Versteifung
- 28: Durchstrahlbereich
- 30: Vertiefung
- 32: Angriffsmerkmal
- 34: Übergang

- A: erstes Bauteil

- X: Dicke

## Patentansprüche

1. Ein Verbindungselement (10) zum Aufkleben auf einer Bauteiloberfläche eines ersten Bauteils (A), sodass mittels des Verbindungselements (10) ein zweites Bauteil am ersten Bauteil (A) befestigbar ist, wobei das Verbindungselement (10) aufweist:
a. ein Basiselement (20), das eine Klebeseite mit einer Klebefläche (22) sowie eine Montagestruktur (24) zur Verbindung mit dem zweiten Bauteil aufweist, wobei
b. die Montagestruktur (24) auf einer der Klebeseite gegenüberliegenden Seite des Basiselements (20) oder lateral dazu angeordnet ist, und
c. das Basiselement (20) weist mindestens einen Durchstrahlbereich (28) auf, so dass das Basiselement (20) im Durchstrahlbereich (28) mit Licht derart durchstrahlbar ist, dass Lichtenergie das Basiselement (20) durchdringt, **dadurch gekennzeichnet, dass**
d. das Basiselement (20) aus einem thermoplastischem Kunststoff mit einer Dauergebrauchstemperatur von mindestens 130 °C besteht, der schlecht oder nicht mit Licht durchstrahlbar ist, und
e. das Basiselement (20) weist im Durchstrahlbereich (28) im Querschnitt eine geringere Dicke (X) auf und ein Transmissionsgrad im Durchstrahlbereich (28) beträgt mindestens 20 % bei einer Wellenlänge des Lichts zwischen 320 und 500 nm oder
f. der Durchstrahlbereich (28) wird durch einen Durchbruch gebildet.

2. Das Verbindungselement (10) gemäß Patentanspruch 1, Merkmal e.,
a) bei dem ein Übergang zum Durchstrahlbereich (28) stufenlos, insbesondere kontinuierlich, ausgebildet ist und/oder
b) bei dem die Dicke im Durchstrahlbereich (28) höchstens 50 % der Dicke des Basiselements (20) benachbart zum Durchstrahlbereich (28) beträgt und/oder
c) bei dem der Transmissionsgrad im Durchstrahlbereich (28) im Vergleich zum übrigen Basiselement (20) um mindestens 50 % erhöht ist und/oder.
d) bei dem der Durchstrahlbereich (28) so ausgebildet ist, dass eine Vertiefung (30) auf der Klebeseite und/oder auf der der Klebeseite gegenüberliegenden Seite des Basiselements (20) vorgesehen ist.

3. Das Verbindungselement (10) gemäß Patentanspruch 1, Merkmal f., bei dem der Durchbruch mittels einer Beschichtung oder eines Stopfens verschlossen ist, die oder der aus einem mit Licht durchstrahlbaren Material besteht.

4. Das Verbindungselement (10) gemäß Patentanspruch 3, bei dem die Beschichtung oder der Stopfen den Durchbruch von der Klebeseite des Basiselements (20) her verschließen.

5. Das Verbindungselement (10) gemäß einem der vorhergehenden Patentansprüche,
a) bei dem die Klebefläche (22) eine Vielzahl an Vorsprüngen aufweist und/oder
b) bei dem der Durchstrahlbereich (28) eine längliche Form aufweist, die insbesondere gebogen ist, und/oder
c) das eine Mehrzahl an Durchstrahlbereichen (28) aufweist.

6. Das Verbindungselement (10) gemäß Patentanspruch 5, Alternative c), bei dem die Klebefläche (22) kreisförmig ist und mindestens zwei Durchstrahlbereiche (28) sind auf einem gedachten gemeinsamen Kreis um einen Mittelpunkt der Klebefläche (22) angeordnet.

7. Das Verbindungselement (10) gemäß einem der vorhergehenden Patentansprüche, bei dem am Basiselement (20) ein Angriffsmerkmal (32) vorgesehen ist, so dass das Verbindungselement (10) automatisiert verarbeitbar ist.

8. Das Verbindungselement (10) gemäß einem der vorhergehenden Patentansprüche, bei dem die Montagestruktur (24) aufweist:
a. einen Bolzen mit Außengewinde, der insbesondere auf einer der Klebeseite gegenüberliegenden Seite des Basiselements (20) angeordnet ist,
b. eine Buchse mit Innengewinde, die insbesondere auf einer der Klebeseite gegenüberliegenden Seite des Basiselements (20) angeordnet ist, oder
c. eine Mutter oder Öffnung, vorzugsweise mit Innengewinde, die lateral am Basiselement (20) bezogen auf die Klebeseite angeordnet ist.

9. Ein erstes Bauteil mit einem darauf aufgeklebten Verbindungselement gemäß einem der vorhergehenden Patentansprüche 1-8.

10. Anordnung bestehend aus einem ersten und einem zweiten Bauteil, die über ein Verbindungselement gemäß einem der Patentansprüche 1-8 miteinander verbunden sind.

11. Herstellungsverfahren eines Verbindungselements gemäß einem der Patentansprüche 1-8, das die folgenden Schritte aufweist:
a. Bereitstellen einer Form, insbesondere Spritzgussform, die komplementär zu dem auszubildenden Verbindungselement ausgebildet ist, **gekennzeichnet durch** die Schritte:
b. Füllen der Form mit einem thermoplastischem Kunststoff mit einer Dauergebrauchstemperatur von mindestens 130 °C, der schlecht oder nicht mit Licht durchstrahlbar ist, und
c. Aushärten des Kunststoffs sowie Entnehmen des Verbindungselements aus der Form.

12. Herstellungsverfahren gemäß Patentanspruch 11, wobei der Durchstrahlbereich (28) durch einen Durchbruch gebildet ist, wobei das Herstellungsverfahren den weiteren Schritt aufweist:
d. Anbringen einer Beschichtung oder eines Stopfens am Durchbruch, die oder der aus einem mit Licht durchstrahlbaren Material besteht.

13. Verfahren zur Befestigung eines ersten Bauteils (A) an einem zweiten Bauteil mittels eines Verbindungselements (10) gemäß einem der Patentansprüche 1-8, das die Schritte umfasst:
a. Anordnen eines mittels Lichtstrahlen härtenden Klebstoffs auf der Klebeseite des Basiselements (20) und/oder dem ersten Bauteil (A),
b. Anordnen der Klebeseite des Verbindungselements (10) auf dem ersten Bauteil (A),
c. Bestrahlen der Anordnung aus erstem Bauteil (A) und darauf angeordnetem Verbindungselement (10) mit Licht, so dass der Klebstoff im Durchstrahlbereich (28) mindestens eine Vorfixierung des Verbindungselements (10) realisiert, sowie
d. Aushärten des Klebstoffs.

14. Verfahren gemäß Patentanspruch 13, umfassend den weiteren Schritt:
e. Anordnen eines zweiten Bauteils am Montagebereich nach dem Aushärten des Klebstoffs.

15. Verfahren gemäß einem der Patentansprüche 13 oder 14, bei dem für den Schritt des Bestrahlens mit Licht Licht mit einer Wellenläge von 320-500 nm verwendet wird und/oder der mittels Lichtstrahlen härtende Klebstoff ist ausgewählt aus einer der Gruppen umfassend: radikalisch härtende Klebstoffe, kationisch härtende Klebstoffe, dual härtende Klebstoffe oder einer Kombination davon.

## Claims

1. A connection element (10) for adhering to a component surface of a first component (A), so that by means of the connection element (10), a second component is fastenable at the first component (A), with the connection element (10) comprising:
a. a base element (20) having an adhesive side with an adhesive surface (22) as well as an assembly structure (24) for connecting with the second component, wherein
b. the assembly structure (24) is arranged on a side of the base element (20) that is opposite to the adhesive side or arranged laterally to it, and
c. the base element (20) comprises at least one irradiation region (28) so that the base element (20) is irradiatable with light in the irradiation region (28) such that light energy penetrates the base element (20), **characterized in that**
d. the base element (20) consists of a thermoplastic plastic material with a temperature of continued use of at least 130 °C which is poorly penetrable with light or not penetrable with light, and
e. in the cross section, the base element (20) has a lower thickness (X) in the irradiation region (28) and a transmission degree in the irradiation region (28) is at least 20 % at a wave length of the light between 320 and 500 nm or
f. the irradiation region (28) is formed by a break-through.

2. The connection element (10) according to claim 1, feature e.,
a) where a transition to the irradiation region (28) is configured steplessly, in particular continuously and/or
b) where the thickness in the irradiation region (28) is not more than 50 % of the thickness of the base element (20) adjacent to the irradiation region (28) and/or
c) where the transmission degree in the irradiation region (28) is increased by at least 50 % compared to the remaining base element (20) and/or
d) where the irradiation region (28) is configured such that a depression (30) is provided on the adhesive side and/or on the side of the base element (20) that is opposite to the adhesive side.

3. The connection element (10) according to claim 1, feature f., where the break-through is closed by means of a coating or a plug which consists of a material that is irradiatable with light.

4. The connection element (10) according to claim 3, where the coating or the plug closes the break-through from the adhesive side of the base element (20).

5. The connection element (10) according to one of the preceding claims,
a) where the adhesive surface (22) comprises a plurality of projections and/or
b) where the irradiation region (28) has an elongated form, which is arched, in particular, and/or
c) which includes a plurality of irradiation regions (28).

6. The connection element (10) according to claim 5, alternative c), where the adhesive surface (22) is arranged in form of a circle and at least two irradiation regions (28) are arranged on an imagined common circle around a center point of the adhesive surface (22).

7. The connection element (10) according to one of the preceding claims, where an engagement feature (32) is provided at the base element (20), so that the connection element (10) is processible in an automated way.

8. The connection element (10) according to one of the preceding claims, with the assembly structure (24) comprising:
a. a bolt with outer thread which is particularly arranged at a side of the base element (20) that is opposite to the adhesive side,
b. a bush with inner thread, which is particularly arranged at a side of the base element (20) that is opposite to the adhesive side, or
c. a nut or opening, preferably with inner thread, that is arranged at the base element (20) laterally with respect to the adhesive side.

9. A first component with a connection element adhered thereon according to one of the preceding claims 1 to 8.

10. Arrangement consisting of a first and a second component which are connected to each other via a connection element according to one of the claims 1 to 8.

11. Manufacturing method of a connection element according to one of the claims 1 to 8, comprising the following steps:
a. providing a mold, in particular an injection mold, which is configured complementary with respect to the connection element to be formed, **characterized by** the steps:
b. filling the mold with a thermoplastic plastic material having a temperature of continued use of at least 130 °C, which is poorly irradiatable with light or not irradiatable with light, and
c. curing the plastic material as well as removing the connection element from the mold.

12. Manufacturing method according to claim 11, with the irradiation region (28) being formed by a break-through, with the manufacturing method comprising the further step:
d. arranging a coating or a plug at the break-through which consists of a material that is irradiatable with light.

13. Method for fastening a first component (A) to a second component by means of a connection element (10) according to one of the claims 1 to 8 which comprises the steps:
a. arranging an adhesive, which cures by means of light beams, on the adhesive side of the base element (20) and/or the first component (A),
b. arranging the adhesive side of the connection element (10) on the first component (A),
c. irradiating the arrangement out of the first component (A) and connection element (10) arranged thereon with light, so that the adhesive realizes in the irradiation region (28) at least a pre-fixing of the connection element (10), as well as
d. curing of the adhesive.

14. Method according to claim 13, comprising the further step:
e. arranging a second component at the assembly portion after the curing of the adhesive.

15. Method according to one of the claims 13 or 14, where light with a wave length of 320 to 500 nm is used for the step of the irradiating with light and/or the adhesive that cures by means of light beams is selected from one of the groups comprising: radically curing adhesives, cationically curing adhesives, dually curing adhesives or a combination thereof.

## Revendications

1. Élément de liaison (10) à coller sur une surface de pièce d'une première pièce (A), de manière à pouvoir fixer une deuxième pièce à la première pièce (A) au moyen de l'élément de liaison (10), l'élément de liaison (10) présentant :
a. un élément de base (20) présentant un côté adhésif avec une surface adhésive (22) ainsi qu'une structure de montage (24) pour la liaison à la deuxième pièce, dans lequel
b. la structure de montage (24) est disposée sur un côté de l'élément de base (20) opposé au côté adhésif ou latéralement par rapport à celui-ci, et
c. l'élément de base (20) présente au moins une région d'irradiation (28), de sorte que l'élément de base (20) peut être irradié de telle façon avec une lumière dans la région d'irradiation (28), que de l'énergie lumineuse traverse l'élément de base (20), **caractérisé en ce que**
d. l'élément de base (20) est constitué d'une matière plastique thermoplastique avec une température d'utilisation permanente d'au moins 130°C, laquelle est difficilement irradiée ou ne peut pas être irradiée avec une lumière, et
e. l'élément de base (20) présente une épaisseur (X) inférieure dans la section transversale dans la région d'irradiation (28) et un degré de transmission dans la région d'irradiation (28) s'élève à au moins 20% à une longueur d'onde entre 320 et 500 nm de la lumière ou
f. la région d'irradiation (28) est formée par une percée.

2. Élément de liaison (10) selon la revendication 1, caractéristique e.,
a) dans lequel une transition à la région d'irradiation (28) est formée sans discontinuité, en particulier de façon continue et/ou
b) dans lequel l'épaisseur dans la région d'irradiation (28) s'élève au maximum à 50% de l'épaisseur de l'élément de base (20) à côté de la région d'irradiation (28) et/ou
c) dans lequel le degré de transmission dans la région d'irradiation (28) est supérieur d'au moins 50% en comparaison avec le reste de l'élément de base (20) et/ou
d) dans lequel la région d'irradiation (28) est conçue de telle façon, qu'un renfoncement (30) est prévu sur le côté adhésif et/ou sur le côté de l'élément de base (20) opposé au côté adhésif.

3. Élément de liaison (10) selon la revendication 1, caractéristique f., dans lequel la percée est fermée au moyen d'un revêtement ou d'un bouchon constitué d'une matière susceptible d'être irradiée avec une lumière.

4. Élément de liaison (10) selon la revendication 3, dans lequel le revêtement ou le bouchon ferme la percée depuis le côté adhésif de l'élément de base (20).

5. Élément de liaison (10) selon l'une des revendications précédentes,
a) dans lequel la surface adhésive (22) présente une pluralité de saillies et/ou
b) dans lequel la région d'irradiation (28) présente une forme oblongue, laquelle est en particulier courbée, et/ou
c) lequel présente une pluralité de régions d'irradiation (28).

6. Élément de liaison (10) selon la revendication 5, alternative c), dans lequel la surface adhésive (22) est circulaire et au moins deux régions d'irradiation (28) sont disposées sur un cercle commun imaginaire autour d'un point central de la surface adhésive (22).

7. Élément de liaison (10) selon l'une des revendications précédentes, dans lequel un élément d'engagement (32) est prévu sur l'élément de base (20), de sorte que l'élément de liaison (10) peut être traité de façon automatisée.

8. Élément de liaison (10) selon l'une des revendications précédentes, dans lequel la structure de montage (24) présente :
a. un boulon avec un filetage extérieur, lequel est en particulier disposé sur un côté de l'élément de base (20) opposé au côté adhésif,
b. une douille avec un filetage intérieur, laquelle est en particulier disposée sur un côté de l'élément de base (20) opposé au côté adhésif, ou
c. un écrou ou une ouverture, de préférence avec un filetage intérieur, lequel/laquelle est disposé(e) latéralement sur l'élément de base (20) par rapport au côté adhésif.

9. Première pièce avec un élément de liaison selon l'une des revendications précédentes 1 à 8 collé sur celle-ci.

10. Agencement constitué d'une première et d'une deuxième pièce, lesquelles sont reliées l'une à l'autre par le biais d'un élément de liaison selon l'une des revendications 1 à 8.

11. Procédé de fabrication d'un élément de liaison selon l'une des revendications 1 à 8, présentant les étapes suivantes :
a. mise à disposition d'un moule, en particulier un moule d'injection, lequel est formé de façon complémentaire à l'élément de liaison à réaliser, **caractérisé par** les étapes suivantes :
b. remplissage du moule avec une matière plastique thermoplastique avec température d'utilisation permanente d'au moins 130°C, laquelle est difficilement irradiée ou ne peut pas être irradiée avec une lumière, et
c. durcissement de la matière plastique et retrait de l'élément de liaison hors du moule.

12. Procédé de fabrication selon la revendication 11, dans lequel la région d'irradiation (28) est formée par une percée, le procédé de fabrication présentant l'étape supplémentaire suivante :
d. fixation d'un revêtement ou d'un bouchon sur la percée, lequel est constitué d'une matière susceptible d'être irradiée avec une lumière.

13. Procédé de fixation d'une première pièce (A) à une deuxième pièce au moyen d'un élément de liaison (10) selon l'une des revendications 1 à 8, présentant les étapes suivantes :
a. application d'une colle durcissable au moyen d'un rayonnement lumineux sur le côté adhésif de l'élément de base (20) et/ou sur la première pièce (A),
b. application du côté adhésif de l'élément de liaison (10) sur la première pièce (A),
c. irradiation de l'agencement constitué de la première pièce (A) et de l'élément de liaison (10) disposé sur celle-ci avec une lumière, de sorte que la colle réalise au moins une préfixation de l'élément de liaison (10) dans la région d'irradiation (28), et
d. durcissement de la colle.

14. Procédé selon la revendication 13, comportant l'étape supplémentaire suivante :
e. disposition de la deuxième pièce dans la région de montage après le durcissement de la colle.

15. Procédé selon l'une des revendications 13 ou 14, dans lequel, pour l'étape d'irradiation avec une lumière, une lumière avec une longueur d'onde de 320-500 nm est utilisée et/ou la colle durcissant au moyen d'un rayonnement lumineux est sélectionnée parmi le groupe comportant : une colle durcissant radicalement, une colle durcissant par voie cationique, une colle durcissant de façon mixte ou une combinaison de celles-ci.
